# EUROPÄISCHE PATENTSCHRIFT

(11) **EP 0 303 590 B1**
(45) Veröffentlichungstag und Bekanntmachung des Hinweises auf die Patenterteilung: **24.03.1993**
(21) Anmeldenummer: 88890201.2
(22) Anmeldetag: 01.08.1988
(51) Int. Cl.: H01B 13/14, B29C 47/06, B29C 47/28, B29C 47/58

(54) **Einrichtung zum Umspritzen einer Seele, inbesondere eines elektrischen Leiters**
Device for spraying the outside of a core, especially one of an electric conductor
Installation de pulvérisation extérieure d'une âme, en particulier d'un conducteur électrique

(30) Priorität: 12.08.1987 AT 2038/87
(43) Veröffentlichungstag der Anmeldung: 15.02.1989
(73) Patentinhaber: Rosendahl Maschinen Gesellschaft m.b.H., 2246 Maria Enzersdorf-Südstadt (AT)
(72) Erfinder: Seibert, Gerhard, A-2500 Baden (AT)
(74) Vertreter: Gibler, Ferdinand, Dipl.Ing. Dr. techn.

(56) Entgegenhaltungen:
- WO-A-87/02932
- CH-A- 608 419

## Beschreibung

Die Erfindung bezieht sich auf eine Einrichtung zum Umspritzen einer Seele, insbesondere eines elektrischen Leiters, mit einer mindestens zwei Schichten oder Streifen aus verschiedenen oder verschieden eingefärbten Materialien aufweisenden Ummantelung, welche Einrichtung mindestens zwei getrennte Zuführkanäle für die plastifizierten Materialien und mindestens zwei von der zu umspritzenden Seele durchsetzbaren Austrittsquerschnitte für die plastifizierten Materialien aufweist, welche Austrittsquerschnitte mit den Zuführkanälen über eine Verteileinrichtung wahlweise verbindbar sind.

Bei solchen Einrichtungen war es bisher üblich zwischen den Zuführkanälen und den Austrittsquerschnitten einen Zylinder vorzusehen, der in einem die Zuführkanäle und die Austrittsquerschnitte, bzw. die Spritzköpfe aufnehmenden Gehäuse axial verschiebbar angeordnet sind, in dem im wesentlichen parallel zueinander laufende Kanäle und einander kreuzende Kanäle angeordnet sind, über die die Zuführkanäle mit den Spritzköpfen wahlweise verbindbar sind. Dabei sind stets nur die halbe Anzahl der in dem Zylinder angeordneten Kanäle von einem plastifizierten Material beaufschlagt, wogegen die andere Hälfte der Kanäle außer Funktion ist.

Dabei ergibt sich der Nachteil, daß die in den außer Funktion gesetzten Kanälen das in diesen verbliebenen Material einfriert und die Kanäle zusetzt, sodaß diese mühsam gereinigt werden müssen, was mit einem sehr erheblichen Aufwand verbunden ist.

Ziel der Erfindung ist es, diesen Nachteil zu vermeiden und eine Einrichtung der eingangs erwähnten Art vorzuschlagen, bei der eine Reinigung nach einem Farb- oder Materialwechsel unterbleiben kann.

Erfindungsgemäß wird dies dadurch erreicht, daß die Verteileinrichtung durch eine Hülse gebildet ist, die mit Bezug auf ein äußeres, die Zuführkanäle für die plastifizierten Materialien aufweisendes Gehäuse zwischen Endstellungen verdrehbar angeordnet ist und eine der Anzahl der zu verspritzenden Materialien entsprechende Anzahl von einer Verbindung von der Außen- zur Innenseite der Hülse oder deren Stirnseite herstellenden Kanälen aufweist, wobei jene Zuführkanäle, die wechselweise mit den Austrittsquerschnitten für die plastifizierten Materialien verbunden werden sollen um den gleichen Winkelbetrag gegeneinander versetzt an der Außenseite der Hülse enden.

Auf diese Weise ist sichergestellt, daß alle Kanäle der Verteileinrichtung stets vom plastifizierten Material durchströmt sind und daher kein Zusetzen der Kanäle mehr möglich ist. Da die Hülse relativ dünnwandig bemessen werden kann ergeben sich auch entsprechend kleine Volumina für deren Kanäle, sodaß bei einem Farb- oder Materialwechsel nur relativ kleine Längen des fertigen Produktes herausgeschnitten werden müssen und verlorengehen.

Eine konstruktiv besonders vorteilhafte Weiterbildung der Erfindung besteht darin, daß die Hülse wenigstens mit dem die zu umspritzende Seele führenden zentralen Kern fest verbunden ist. Hiebei kann die Hülse auch noch mit Formeinsätzen des Austrittsdüsenbereiches verbunden sein.

Um bei einem Farb- oder Materialwechsel, bei dem es zu einem, wenn auch nur kurzzeitigen Unterbrechen des Strömens des plastifizierten Materials kommt, eine Änderung der Arbeitsbedingungen der die Einrichtung zum Umspritzen versorgenden Extruder weitestgehend zu vermeiden, kann nach einem weiteren Merkmal der Erfindung vorgesehen sein, daß in der Hülse Kanäle angeordnet sind, die die Zuführkanäle im Bereich von Zwischenstellungen der Hülse zwischen deren Endstellungen mit im Gehäuse angeordneten Überlaufkanälen verbinden.

Auf diese Weise kann der Strom des plastifizierten Materials bei einem Farb- oder Materialwechsel praktisch ununterbrochen aufrecht erhalten bleiben, sodaß von einer Regelung der Extruder während des Farb- oder Materialwechsels Abstand genommen werden kann.

Um die Konstruktion zu vereinfachen kann weiters vorgesehen sein, daß die Hülse oder ein mit dieser verbundener Einsatz gleichzeitig einen Durchtrittsquerschnitt für eines der zu verspritzenden plastifizierten Materialien begrenzt.

Bei einer erfindungsgemäßen Einrichtung zum Ummanteln einer Seele mit annähernd gleich starken Schichten kann nach einem weiteren Merkmal der Erfindung vorgesehen sein, daß die in der Hülse angeordneten Kanäle in an sich bekannter Weise durch sich trompetenartig erweiternde, an der Außenseite der Hülse angeordnete Nuten gebildet sind, die sich in ihrem Endbereich, der gegenüber deren mit den Zuführkanälen verbindbaren Anfang in axialer Richtung der Hülse versetzt ist, über nahezu den gesamten Umfang der Hülse erstrecken und die über durch Stege voneinander getrennte Ausnehmungen mit der Innenseite der Hülse oder eines in diese eingesteckten Teiles verbunden sind, wobei sich die Nuten gegebenenfalls in einander entgegengesetzten Richtungen erweitern und von denen die eine mit einem, in Richtung der Zuführrichtung der zu umspritzenden Seele gesehen, stromauf gelegenen, die innere Schichte begrenzenden und die andere mit dem stromab gelegenen Austrittsquerschnitt verbunden ist.

Die Ausbildung solcher, als Verbindungskanal diender Nuten ist bei Spritzköpfen zur Herstellung von Ummantelungen mit spiralig verlaufenden Nuten bereits bekannt, bei denen es jedoch zu keinem Farb- oder Materialwechsel kommt, zur Versorgung eines rotierenden Spritzkopfes bekannt.

Durch die vorgeschlagene Ausbildung der Kanäle bei der erfindungsgemäßen Einrichtung kommt es zu einem über den Umfang weitgehend gleichmäßigen Zustrom des plastifizierten Materials zu den Austrittsquerschnitten, die von der zu umspritzenden Seele durchsetzt sind. Dadurch kommt es auch zur Bildung entsprechend homogener Mantelschichten auf der Seele. Bei sich in einander entgegengesetzten Richtungen erweiternden Nuten ergibt sich der Vorteil einer sehr kompakten Bauweise.

Bei einer Einrichtung nach der Erfindung zum Ummanteln einer Seele mit einer relativ starken inneren Schichte und einer diese umgebenden dünnen äußeren Schichte oder eines Streifens aus einem anderen oder anders gefärbten Material, bei der der Spalt für das die dünne äußere Schichte oder den Strich ausbildende Material durch die aufgebrachte dickere innere Schichte begrenzt ist und bei der zwei Zuführkanäle für unterschiedliche, bzw. unterschiedlich gefärbte Materialien zur Ausbildung der dünnen äußeren Schichte oder des Striches, von denen jeweils einer mit einem von der kegelförmigen Stirnfläche eines die zu umspritzende Seele führenden Kernes und einem zu dieser im wesentlichen gegengleich ausgebildeten Formstückes begrenzten Ringraum verbindbar ist und ein Zuführkanal für das die innere Schichte bildende Material vorgesehen sind, kann nach einem weiteren Merkmal der Erfindung vorgesehen sein, daß die Hülse einen durch über deren Umfang verteilt angeordnete Durchbrüche gebildeten, mit dem sich über mindestens einem Teil des Umfanges der Hülse erstreckenden Zuführkanal für das die innere Schichte bildende Material in Verbindung stehenden Kanal , der in einen Spalt zwischen dem die zu umspritzende Seele führenden Kern stromauf dessen kegelförmiger Stirnfläche mündet und in den ein weiterer, in den Endstellungen der Hülse an je einem der beiden übrigen Zuführkanäle anschließender Kanal mündet, sowie einen weiteren Kanal aufweist, der einen der beiden weiteren Zuführkanäle mit einem im Bereich der kegelförmigen Stirnfläche des Kernes angeordneten Spalt verbindet.

Dabei ist es möglich alle drei zur Versorgung der Einrichtung zum Umspritzen unabhängig von einem Farb- oder Materialwechsel laufen zu lassen, wobei das über einen Zuführkanal zuströmende Material dem das Material für den Aufbau der inneren Schichte führenden Kanal beigemischt wird.

Bei einer erfindungsgemäßen Einrichtung zum Ummanteln einer Seele mit annähernd gleich starken Schichten und zur Aufbringung einer Strichmarkierung, bei der zusätzlich zwei Zuführkanäle vorgesehen sind, von denen jeweils einer mit einem Spalt verbindbar ist, der in den, in Zuführrichtung der zu umspritzenden Seele gesehen, stromabgelegenen Austrittsquerschnitt mündet, kann weiters vorgesehen sein, daß die Hülse weiters einen Kanal, der mit einem der beiden zusätzlichen Zuführkanäle verbindbar ist und in den mit dem stromaufgelegenen Austrittsquerschnitt verbundenen Kanal mündet und einen weiteren, in den zum stromabgelegenen Austrittsquerschnitt führenden Spalt mündenden und mit einem der beiden zusätzlichen Zuführkanäle verbindbaren Kanal aufweist.

Mit einer solchen Einrichtung ist auf sehr einfache Weise sowohl ein Farb- oder Materialwechsel bei den beiden Schichten der Ummantelung wie auch der Strichmarkierung möglich. Dazu ist es lediglich erforderlich die Hülse entsprechend zu verdrehen.

Die Erfindung wird nun anhand der Zeichnung näher erläutert. Dabei zeigen:

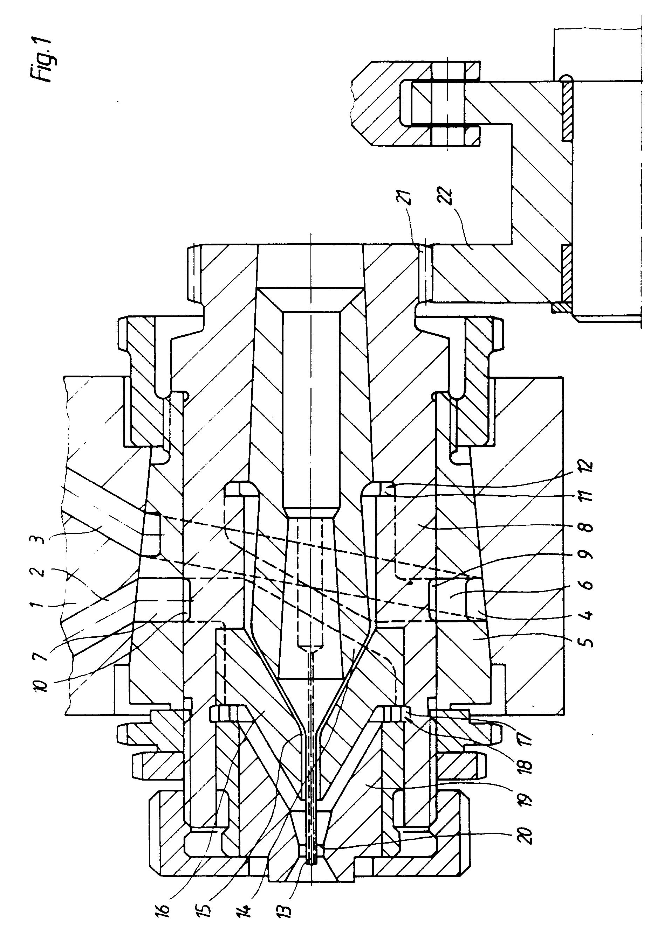

Fig. 1 bis 3 verschiedene Ausführungsformen erfindungsgemäßer Einrichtungen.

Die Ausführungsform gemäß der Fig. 1 ermöglicht einen Farb- oder Materialwechsel bei einer zweischichtigen Ummantelung.

In dem Gehäuse 1 sind zwei Zuführkanäle 2 und 3 für die Zubringung der in zwei nicht dargestellten Extrudern aufbereiteten plastifizierten Massen, wobei der Zuführkanal in einer sich im wesentlichen über 180° erstreckenden Nut 4 des Gehäuses endet, sodaß die Enden der Zuführkanäle einander gegenüberliegen. In diesem Gehäuse 1 ist eine festangeordnete Hülse 5 mit konischer Außenwand gehalten, die praktisch einen Teil des Gehäuses darstellt und an ihrer Außenseite die Nut 4 sowie entsprechende Durchbrüche 6 und 7 für die Verbindung der Zuführkanäle mit der Verteileinrichtung aufweist. Alternativ könnte diese Hülse 5 mit dem Gehäuse 1 auch einstückig ausgeführt sein.

Diese Verteileinrichtung ist durch die verdrehbar in der Hülse 5 gehaltene Hülse 8 gebildet, die mit zwei sich trompetenartig erweiternde Nuten 9, 10 versehen ist. Diese Nuten 9, 10 erweitern sich in einem gegen deren mit den Durchbrüchen 6 und 7 der festen Hülse 5 in Verbindung bringbaren Anfängen axial versetzten Bereichen, wobei sich die Nuten 9, 10 in einander entgengesetzten Richtungen erweitern.

Die Nut 9 ist über durch Stege 11 voneinander getrennte, über den Umfang verteilt angeordnete Durchbrüche 12 mit einem zwischen der Außenwand des die Seele 13, z.B. einen Draht führenden Kern 14 und der Innenwand der Hülse 8 gelegenen Ringraum verbunden, in den in der in Fig. 1 dargestellten Lage der Einrichtung die über den Zuführkanal 3 zuströmende Masse stromauf der kegelförmigen Stirnseite des Kernes 14 eindringen kann und sich in weiterer Folge als innere Schichte an die Seele 13 anlegt.

Der für die Aufbringung der inneren Schichte erforderliche Austrittsquerschnitt 15 wird dabei neben dem Kern 14 durch einen in die Hülse 8 eingesetzten und mit dieser verbundenen Formeinsatz 16, dessen Innenwand im wesentlichen gegengleich zu der kegelförmigen Stirnseite des Kernes 14 ausgebildet ist, begrenzt.

Dieser Formeinsatz 16 ist mit über den Umfang verteilt angeordneten Durchbrüchen 17, die durch Stege 18 voneinander getrennt sind, mit der Nut 10 der Hülse 8 verbunden, sodaß das über den Zuführkanal 2 zuströmende plastifizierte Material in den von der kegelförmigen Stirnseite des Formeinsatzes 16 und der im wesentlichen gegengleich zu dieser ausgebildeten Innenseite eines weiteren Formeinsatzes 19 gebildeten Ringspalt eindringen kann und sich in weiterer Folge an die innere Schichte der Ummantelung der Seele 13 anlegt.

Die Ausformung der äußeren Schichte erfolgt dabei durch den von dem Formeinsatz 19 bestimmten Austrittsquerschnitt 20.

Die Hülse 8 ist mit dem Kern 14 und den Formeinsätzen 16 und 19 fest verbunden, so daß diese Teile gemeinsam mit der Hülse verdrehbar sind.

Bei einem Farb- oder Materialwechsel der inneren und äußeren Schichte der Ummantelung der Seele 13 ist es lediglich erforderlich die Hülse 8 um 180° zu verdrehen, wozu diese mit einem Zahnkranz 21 versehen ist, der mit einem Antriebsritzel 22 kämmt.

Dabei ist sichergestellt, daß stets die gleichen Kanäle der Hülse 8, die durch die Nuten 9 und 10 und die mit diesen in Verbindung stehenden Durchbrüche 12 und 17 gebildet sind, von den plastifizierten Massen durchströmt sind, da eben keine weiteren, eine Verbindung der Austrittsquerschnitte 15, 20 mit den Zuführkanälen ermöglichende Kanäle vorhanden sind.

Dadurch ist aber auch die Gefahr des Zusetzens solcher Kanäle nach einem Farb- ober Materialwechsel sicher vermieden, sodaß auf eine Reinigung von Kanälen nach einem solchen Wechsel verzichtet werden kann.

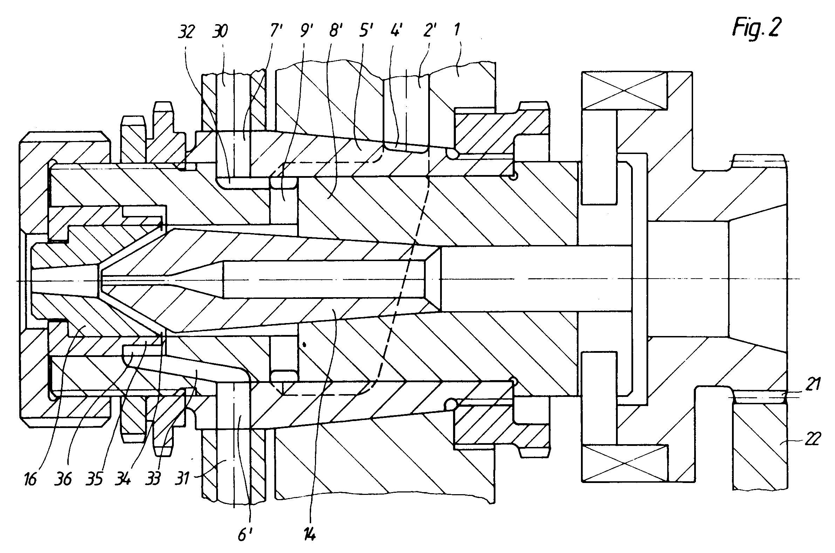

Die Ausführungsform gemäß der Fig. 2 ermöglicht eine Ummantelung einer Seele 13 mit einer dicken inneren Schichte aus einem im wesentlichen gleichbleibenden Material und einer dünnen äußeren Schichte oder einer Strichmarkierung aus einem unterschiedlichen Material oder unterschiedlich eingefärbtem Material.

Bei dieser ist ein Zuführkanal 2′ für das zur Ausbildung der inneren dicken Schichte der Ummantelung vorgesehene Material im Gehäuse 1 angeordnet, in dem eine fest angeordnete Hülse 5' gehalten ist.

Diese Hülse weist eine sich trompetenartig erweiternde Nut 4′auf, die über Durchbrüche, die über den Umfang verteilt angeordnet sind, mit einem Kanal, der in der in der festen Hülse 5′verdrehbar gehaltenen Hülse 8′ in Form von über deren Umfang verteilt angeordnete Durchbrüche 9′gebildet ist, in Verbindung stehen, unabhängig davon in welcher Lage sich die verdrehbare Hülse 8 relativ zum Gehäuse 1 befindet. Diese Durchbrüche 9′ münden in einen Ringraum, der von der Außenseite des Kernes 8 + 14 und der Innenseite der verdrehbaren Hülse 8′ begrenzt ist. Dabei münden die Durchbrüche 9′ stromauf der kegelförmigen Stirnseite des Kernes 14.

In den durch die Durchbrüche 9′gebildeten Kanal der beweglichen Hülse 8′mündet ein weiterer durch eine an der Außenseite der beweglichen Hülse 8′ angeordnete Nut 32 gebildeter Kanal, der mit einem der für die Zufuhr des für die Ausbildung der dünnen Außenschichte oder der Strichmarkierung vorgesehenen weiteren Zuführkanäle 30, 31 verbindbar ist. Dabei verbindet dieser, durch die Nut 32 gebildete Kanal je nach der Stellung der beweglichen Hülse 8′ entweder den Zuführkanal 30 oder den Zuführkanal 31, die beide einander diametral gegenüberliegend angeordnet sind, mit dem durch die Durchbrüche 9′ gebildeten Kanal, wodurch in der dargestellten Lage der beweglichen Hülse 8′ eine Vermischung der über die Zuführkanäle 2′ und 30 zuströmenden Massen und damit eine Einfärbung der die Ummantelung im wesentlichen bildende Masse möglich wird.

Weiters ist ein durch eine schräge Bohrung 33 gebildeter Kanal in die bewegliche Hülse 8′ eingearbeitet, der, abhängig von der Lage der beweglichen Hülse 8′, einen der zusätzlichen Zuführkanäle 30, 31 mit einem von der Innenwand der beweglichen Hülse 8′ und einem in diese eingesetzten Formstück 35 begrenzten Ringraum 36 verbindet, der über einen Spalt 34 mit dem von der kegelförmigen Stirnseite des Kernes 14 und der Innenwand des in das Formstück 35 eingesetzten Formstückes 16′ begrenzten Ringraum verbunden ist, welcher Ringraum auch von der über den Zuführkanal 2′ einströmenden Masse durchströmt ist. Dabei legt sich das in der dargestellten Lage über den Zuführkanal 31 zugeführte Material an der Außenseite des durch diesen Ringspalt strömenden Massekegels an und bildet an der fertig ummantelten Seele 13 ein dünnes Häutchen, falls, wie in der Fig. 2 dargestellt, der Spalt 34 als ein umlaufender Spalt ausgebildet ist. Ist der Spalt 34 dagegen als begrenzter Durchbruch ausgebildet, so bildet die über den Zuführkanal 31 zuströmende Masse eine Strichmarkierung auf der Ummantelung aus.

Auch bei dieser Ausführungsform ist die Hülse 8 mit dem Kern 14 und dem Formstück 35 und 16′ zum Zwecke der gemeinsamen Verdrehbarkeit fest verbunden.

Mit dieser Einrichtung, deren bewegliche Hülse 8′ mit einem Zahnkranz 21, der mit einem Antriebsritzel 22 kämmt, versehen ist, kann daher die Farbe oder das für die Außenschichte oder einer Strichmarkierung verwendete Material durch ein einfaches Verdrehen der beweglichen Hülse 8′ geändert werden, wobei eine der über die Zuführkanäle 30, 31 zugeführten Massen mit der über den Zuführkanal 2′ zugeführten Masse vermischt wird. Dadurch können die zur Speisung der Zuführkanäle vorgesehenen, nicht dargestellten Extruder mit einer gleichbleibenden Förderleistung betrieben werden.

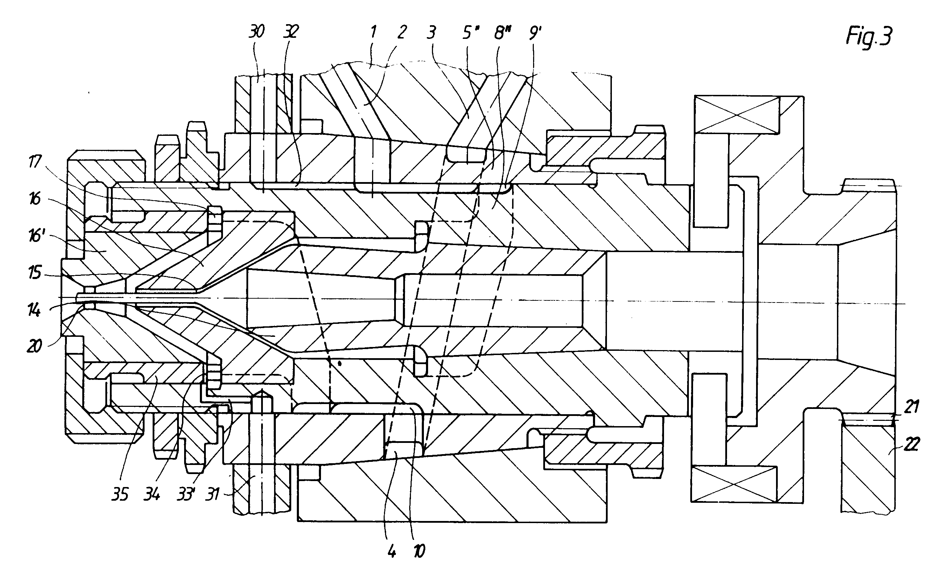

Die Ausführungsform gemäß der Fig. 3 dient zur Aufbringung einer zweischichtigen Ummantelung mit einer Strichmarkierung, wobei sowohl die das Material, bzw. die Farben der beiden Schichten, wie auch der Strichmarkierung geändert werden können.

Dabei unterscheidet sich die Ausführungsform gemäß der Fig. 3 von jener gemäß der Fig 1 nur in der Weise, daß zwei weitere Zuführkanäle 30, 31 vorgesehen sind.

Zur Verbindung dieser zusätzlichen Zuführkanäle 30, 31 ist in der beweglichen Hülse 8˝ ein durch eine an deren Außenseite angeordnete Nut 32 gebildeter Kanal vorgesehen, der in der dargestellten Lage der beweglichen Hülse 8˝ in die Nut 9′ der beweglichen Hülse 8˝ mündet. Dadurch gelangt die über den Zuführkanal 31 zuströmende Masse in die über den Zuführkanal 2 zuströmende Masse und weiter, wie bereits anhand der Fig. 1 erläutert wurde, in den durch den Kern 14 und die Innenwand der beweglichen Hülse 8˝ begrenzten Ringspalt stromauf der kegelförmigen Stirnseite des Kernes 14.

Der Zuführkanal 3 ist in der dargestellten Lage der beweglichen Hülse 8˝ über die Nut 10 und die an diese anschließenden Durchbrüche 17 mit dem von dem in die Hülse 8˝ eingesetzten Formstück 16 und einem gegengleiche Flächen zu diesem aufweisenden weiteren Formstück 16′ begrenzten Ringspalt verbunden, der die äußere Schichte der Ummantelung bestimmt. Für den Zuführkanal 31 ist ein weiterer Kanal 33′ in der beweglichen Hülse 8˝ vorgesehen, der durch Bohrungen gebildet ist und der zu einem Spalt 34 führt, der in den von den Formstücken 16, 16′ begrenzten Ringraum führt.

Dabei legt sich das in der dargestellten Lage der Hülse 8˝ in diesen einströmende Material an der Außenseite des diesen Ringraum durchströmenden Massekegels an und bildet eine Strichmarkierung.

Durch entsprechendes Verdrehen der Hülse 8˝ wird die Anspeisung des stromauf gelegenen Ringraumes mit jenem des stromab gelegenen Ringraumes vertauscht, wobei auch der Kanal 33′ und das den Spalt 34 aufweisende Formstück 35 mit verdreht werden und mit dem Zuführkanal 30 in Verbindung gebracht werden, sodaß auch eine Änderung der Versorgung der Strichmarkierung eintritt.

## Patentansprüche

1. Einrichtung zum Umspritzen einer Seele (13), insbesondere eines elektrischen Leiters, mit einer mindestens zwei Schichten oder Streifen aus verschiedenen oder verschieden eingefärbten Materialien aufweisenden Ummantelung, welche Einrichtung mindestens zwei getrennte Zuführkanäle (2, 3, 30, 31) für die plastifizierten Materialien und mindestens zwei von der zu umspritzenden Seele (13) durchsetzbaren Austrittsquerschnitte (15, 20) für die plastifizierten Materialien aufweist, welche Austrittsquerschnitte mit den Zuführkanälen (2, 3, 30, 31) über eine Verteileinrichtung wahlweise verbindbar sind, **dadurch gekennzeichnet**, daß die Verteileinrichtung durch eine Hülse (8) gebildet ist, die mit Bezug auf ein äußeres, die Zuführkanäle (2, 3, 30, 31) für die plastifizierten Materialien aufweisendes Gehäuse (1) zwischen Endstellungen verdrehbar angeordnet ist und eine der Anzahl der zu verspritzenden Materialien entsprechende Anzahl von eine Verbindung von der Außen- zur Innenseite der Hülse (8) oder deren Stirnseite herstellenden Kanälen aufweist, wobei jene Zuführkanäle (2, 3; 30, 31), die wechselweise mit den Austrittsquerschnitten (15, 20) für die plastifizierten Materialien verbunden werden sollen, um den gleichen Winkelbetrag gegeneinander versetzt an der Außenseite der Hülse (8) enden.

2. Einrichtung nach Anspruch 1, dadurch gekennzeichnet, daß die Hülse (8) wenigstens mit dem die zu umspritzende Seele (13) führenden zentralen Kern (14) fest verbunden ist.

3. Einrichtung nach Anspruch 1 oder 2, dadurch gekennzeichnet, daß in der Hülse (8) Kanäle angeordnet sind, die die Zuführkanäle (2, 3) im Bereich von Zwischenstellungen der Hülse (8) zwischen deren Endstellungen mit im Gehäuse (1) angeordneten überlaufkanälen verbinden.

4. Einrichtung nach Anspruch 1, 2 oder 3, dadurch gekennzeichnet, daß die Hülse (8) oder ein mit dieser verbundener Einsatz gleichzeitig einen Durchtrittsquerschnitt für eine der zu verspritzenden plastifizierten Materialien begrenzt.

5. Einrichtung nach einem der Ansprüche 1 bis 4 zum Ummanteln einer Seele mit annähernd gleich starken Schichten, **dadurch gekennzeichnet,** daß die in der Hülse (8) angeordneten Kanäle in an sich bekannter Weise durch sich trompetenartig erweiternde, an der Außenseite der Hülse (8) angeordnete Nuten (9, 10) gebildet sind, die sich in ihrem Endbereich, der gegenüber deren mit den Zuführkanälen (2, 3) verbindbaren Anfang in axialer Richtung der Hülse versetzt ist, über nahezu den gesamten Umfang der Hülse (8) erstrecken und die über durch Stege (11, 18) voneinander getrennte Ausnehmungen (12, 17) mit der Innenseite der Hülse (8) oder eines in diese eingesteckten Teiles (16) verbunden sind, wobei sich die Nuten (9, 10) gegebenenfalls in einander entgegengesetzten Richtungen erweitern und von denen die eine mit einem, in Richtung der Zuführrichtung der zu umspritzenden Seele (13) gesehen, stromauf gelegenen, die innere Schichte begrenzenden und die andere mit dem stromab gelegenen Austrittsquerschnitt verbunden ist.

6. Einrichtung nach einem der Ansprüche 1 bis 4 zum Ummanteln einer Seele mit einer relativ starken inneren Schichte und einer diese umgebenden dünnen äußeren Schichte oder eines Streifens aus einem anderen oder anders gefärbten Material, bei der der Spalt für das die dünne äußere Schichte oder den Strich ausbildende Material durch die aufgebrachte dickere innere Schichte begrenzt ist und bei der zwei Zuführkanäle für unterschiedliche, bzw. unterschiedlich gefärbte Materialien zur Ausbildung der dünnen äußeren Schichte oder des Striches, von denen jeweils einer mit einem von der kegelförmigen Stirnfläche eines die zu umspritzende Seele führenden Kernes und einem zu dieser im wesentlichen gegengleich ausgebildeten Formstückes begrenzten Ringraum verbindbar ist und ein Zuführkanal für das die innere Schichte bildende Material vorgesehen sind, **dadurch gekennzeichnet,** daß die Hülse (8) einen durch über deren Umfang verteilt angeordnete Durchbrüche (9') gebildeten, mit dem sich über mindestens einem Teil des Umfanges der Hülse (8) erstreckenden Zuführkanal (2′) für das die innere Schichte bildende Material in Verbindung stehenden Kanal, der in einen Spalt zwischen dem die zu umspritzende Seele (13) führenden Kern (14) stromauf dessen kegelförmiger Stirnfläche mündet und in den ein weiterer, in den Endstellungen der Hülse (8) an je einem der beiden übrigen Zuführkanäle (30, 31) anschließender Kanal mündet, sowie einen weiteren Kanal (33) aufweist, der einen der beiden weiteren Zuführkanäle (30, 31) mit einem im Bereich der kegelförmigen Stirnfläche des Kernes (14) angeordneten Spalt (34) verbindet.

7. Einrichtung nach Anspruch 5, bei dem zusätzlich zwei Zuführkanäle vorgesehen sind, von denen jeweils einer mit einem Spalt verbindbar ist, der in den, in Zuführrichtung der zu umspritzenden Seele gesehen, stromabgelegenen Austrittsquerschnitt mündet, **dadurch gekennzeichnet,** daß die Hülse (8) weiters einen Kanal (32), der mit einem der beiden zusätzlichen Zuführkanäle (30, 31) verbindbar ist und in den mit dem stromauf gelegenen Austrittsquerschnitt (15) verbundenen Kanal mündet und einen weiteren, in den zum stromab gelegenen Austrittsquerschnitt (20) führenden Spalt (34) mündenden und mit einem der beiden zusätzlichen Zuführkanäle (30, 31) verbindbaren Kanal (33') aufweist.

## Claims

1. Apparatus for encapsulating a core (13), in particular of an electrical conductor, in a sheathing having at least two layers or strips of different or differently coloured materials, which apparatus has at least two separate feed channels (2, 3, 30, 31) for the plasticised materials and at least two outlet cross-sections (15, 20) for the plasticised materials, which outlet cross-sections can be passed through by the core (13) to be encapsulated and can be connected, according to choice, to the feed channels (2, 3, 30, 31) via a distributing device, characterised in that the distributing device is formed by a sleeve (8) which is arranged rotatably between end positions with respect to an outer housing (1), having the feed channels (2, 3, 30, 31) for the plasticised materials, and has a number, corresponding to the number of materials to be extruded, of channels establishing a connection from the outside to the inside of the sleeve (8) or the end face of the latter, those feed channels (2, 3; 30, 31) which are to be connected alternately to the outlet cross-sections (15, 20) for the plasticised materials ending on the outside of the sleeve (8) offset with respect to one another by the same angular amount.

2. Apparatus according to Claim 1, characterised in that the sleeve (8) is firmly bonded at least to the central core (14) guiding the core (13) to be encapsulated.

3. Apparatus according to Claim 1 or 2, characterised in that channels which connect the feed channels (2, 3) in the region of intermediate positions of the sleeve (8) between their end positions to overflow channels arranged in the housing (1) are arranged in the sleeve (8).

4. Apparatus according to Claim 1, 2 or 3, characterised in that the sleeve (8) or an insert connected to the latter at the same time bounds a passage cross-section for one of the plasticised materials to be extruded.

5. Apparatus according to one of Claims 1 to 4 for encapsulating a core in layers of approximately the same thickness, characterised in that the channels arranged in the sleeve (8) are formed in a way known per se by grooves (9, 10) which widen in the manner of a trumpet, are arranged on the outside of the sleeve (8) and extend over virtually the entire circumference of the sleeve (8) in their end region, which is offset in the axial direction of the sleeve with respect to their beginning, which can be connected to the feed channels (2, 3), and which grooves are connected via clearances (12, 17), separated from one another by webs (11, 18), to the inside of the sleeve (8) or of a part (16) inserted into the latter, in which arrangement, if appropriate, the grooves (9, 10) widen in mutually opposite directions and one of them is connected to an outlet cross-section which, seen in the direction of the feeding direction of the core (13) to be encapsulated, is located upstream and bounds the inner layer, and the other is connected to the outlet cross-section which is located downstream.

6. Apparatus according to one of Claims 1 to 4 for encapsulating a core in a relatively thick inner layer and, surrounding the latter, a thin outer layer or a strip of a different or differently coloured material, in which the gap for the material forming the thin outer layer or the coating is bounded by the applied thicker inner layer and in which there are provided two feed channels for different or differently coloured materials for forming the thin outer layer or the coating, one of which in each case can be connected to an annular space bounded by the conical end face of a core, guiding the core to be encapsulated, and a fitting designed essentially diametrically opposed to the said guiding core, and there is provided a feed channel for the material forming the inner layer, characterised in that the sleeve (8) has a channel which is formed by penetrations (9'), distributed over the circumference of the said sleeve, is in connection with the feed channel (2') for the material forming the inner layer and extending over at least part of the circumference of the sleeve (8), opens out into a gap between the core (14), guiding the core (13) to be encapsulated, upstream of the conical end face of the said guiding core, and into which channel there opens a further channel which, in the end positions of the sleeve (8), connects in each case to one of the two remaining feed channels (30, 31), and the said sleeve has a further channel (33), which connects one of the two further feed channels (30, 31) to a gap (34) arranged in the region of the conical end face of the core (14).

7. Apparatus according to Claim 5, in which there are additionally provided two feed channels, one of which in each case can be connected to a gap which opens out into the outlet cross-section located downstream, seen in the feeding direction of the core to be encapsulated, characterised in that the sleeve (8) has, furthermore, a channel (32), which can be connected to one of the two additional feed channels (30, 31) and opens out into the channel connected to the outlet cross-section (15) located upstream, and a further channel (33'), which opens out into the gap (34) leading to the outlet cross-section (20) located downstream and can be connected to one of the two additional feed channels (30, 31).

## Revendications

1. Dispositif pour boudiner une âme (13), en particulier d'un conducteur électrique, comportant un gainage qui présente au moins deux couches ou bandes en matériaux différents ou colorés différemment dans la masse, dispositif présentant au moins deux canaux d'amenée (2,3,30,31) séparés pour les matériaux plastifiés et au moins deux sections transversales de sortie (15,20) susceptibles d'être traversées par l'assemblage de conducteurs (13) à boudiner, pour les matériaux plastifiés, les sections transversales de sortie (15,20) étant susceptibles d'être reliées au choix aux canaux d'amenée (2,3,30,31), par l'intermédiaire d'un dispositif distributeur, caractérisé en ce que le dispositif distributeur est formé par une douille (8) disposée de façon à pouvoir tourner entre des positions finales, par rapport à un carter extérieur (1), présentant les canaux d'amenée (2,3,30,31) pour les matériaux plastifiés, et présente un nombre, correspondant au nombre des matériaux à injecter, de canaux qui établissent une liaison entre le côté extérieur et intérieur de la douille (8) ou de son côté frontal, chacun des canaux d'amenée (2,3;30,31), devant alternativement être relié aux sections transversales de sortie (15,20) pour les matériaux plastifiés, finissant en face extérieure de la douille, décalé d'une même valeur angulaire.

2. Dispositif selon la revendication 1, caractérisé en ce que la douille (8) est reliée rigidement au moins au noyau central (14) guidant l'assemblage de conducteurs (13) à boudiner.

3. Dispositif selon la revendication 1 ou 2, caractérisé en ce que dans la douille (8) sont disposés des canaux qui, dans la zone des positions intermédiaires de la douille (8), entre ses positions finales, relient les canaux d'amenée (2,3) à des canaux de déversement disposés dans le carter (1).

4. Dispositif selon la revendication 1, 2 ou 3, caractérisé en ce que la douille (8), ou une garniture reliée à celle-ci, limite simultanément une section transversale de passage pour l'un des matériaux plastifiés à injecter.

5. Dispositif selon l'une des revendications 1 à 4, pour boudiner un assemblage de conducteurs avec des couches d'épaisseurs à peu près égales, caractérisé en ce que les canaux disposés dans la douille (8) sont formés, de manière connue, par des gorges (9,10) disposées en face extérieure de la douille et s'élargissant en trompette, qui s'étendent sur pratiquement la totalité de la périphérie de la douille (8), sur leur zone d'extrémité, décalée en direction axiale de la douille, par rapport à leur amorce, susceptible d'être reliée aux canaux d'amenée (2,3), et gorges (9,10) reliées, par des évidements (12,17) séparés les uns des autres au moyen de nervures (11,18), au côté intérieur de la douille (8) ou d'une pièce (16) insérée dans celle-ci, où les gorges (9,10) s'agrandissent, le cas échéant, dans des directions opposées les unes aux autres, et dont, lorsqu'on observe en direction de l'amenée à l'assemblage de conducteurs (13) à boudiner, les unes sont reliées à une section transversale de sortie, placée en amont et délimitant la couche intérieure et les autres sont reliées à la section transversale de sortie placée en aval.

6. Dispositif selon l'une des revendications 1 à 4, pour boudiner un assemblage de conducteurs avec une couche intérieure d'épaisseur relativement forte et une couche extérieure mince, entourant celle-ci ou une bande d'un matériau autre ou autrement coloré, dans lequel l'interstice, pour le matériau qui constitue la couche extérieure mince ou la bande, est limité par les couches intérieures plus épaisses ayant été appliquées, et dispositif dans lequel sont prévus, d'une part, deux canaux d'amenée, pour des matériaux différents, ou de couleur différente, destinés à la formation de la couche ou des couche(s) extérieure(s) minces, canaux d'amenée dont chaque fois l'un est susceptible d'être relié à un espace annulaire limité par la surface frontale conique d'un noyau assurant le guidage de l'assemblage de conducteurs à boudiner et par une pièce de forme réalisée de façon pratiquement complémentaire, et, d'autre part, un canal d'amenée pour le matériau qui forme la couche intérieure, caractérisé en ce que la douille (8) présente un canal d'amenée (2'), formé au moyen de passages (9') distribués sur la périphérie de la douille (8) et s'étendant sur au moins une partie de la périphérie de la douille (8), pour le canal qui est relié au matériau destiné à la couche intérieure et qui débouche dans un interstice, formé avec le noyau assurant le guidage de l'assemblage de conducteurs (13) à boudiner, en amont de sa surface frontale conique, et dans lequel débouche un autre canal, se raccordant, dans les positions finales de la douille (8), à chacun des deux autres canaux d'amenée (30,31), ainsi qu'un autre canal (33), qui relie les deux autres canaux (30,31) à un interstice (34) disposé dans la zone de la surface frontale conique du noyau (14).

7. Dispositif selon la revendication 5, dans lequel sont prévus en plus deux canaux d'amenée, dont chaque fois l'un est relié à un interstice qui, en observant dans la direction d'amenée de l'assemblage de conducteurs à boudiner, débouche dans la section transversale de sortie située en aval, caractérisé en ce que la douille (8) présente en plus un canal (32), susceptible d'être relié à l'un des deux canaux d'amenée supplémentaires (30,31) et qui débouche dans le canal relié à la section transversale de sortie (15) placée en amont, et présente un autre canal (33'), qui débouche dans l'interstice (34) menant à la section transversale de sortie (20) placée en aval et susceptible d'être relié à l'un des deux canaux supplémentaires (30,31).
